# EUROPEAN PATENT APPLICATION

(11) **EP 4 585 889 A1**
(43) Date of publication of application: **16.07.2025**
(21) Application number: 24305098.6
(22) Date of filing: 15.01.2024
(51) Int. Cl.: G01J 5/02, G01J 5/04, G01J 5/08, G01J 5/20, G01J 5/00

(54) **CORE-SHELL STRUCTURE FOR A BOLOMETRIC DETECTOR**

(71) Applicant: Centre National de la Recherche Scientifique, 75016 Paris (FR); Université Paris-Saclay, 91190 Gif-sur-Yvette (FR)
(72) Inventor: YAKOVLEVA, Marina, 92160 ANTONY (FR); PARDO, Fabrice, 94400 VITRY-SUR-SEINE (FR); PELOUARD, Jean-Luc, 75011 PARIS (FR)
(74) Representative: IPAZ

(57) **Abstract**

The invention relates to a core-shell structure for bolometric detector wherein:
- the core (1) consists of a metal element, forming an absorber element for the incident electromagnetic radiation to be detected
- the shell (2) being constituted of an optical dielectric material covering the metal core,
said core/shell structure providing a thermometer function to measure the temperature of the absorber.

## Description

The invention refers to bolometric detectors, which are photodetectors, mainly used for long wavelengths of the infrared and for THz domains. The invention relates in particular to an optical antenna designed to be used in an infrared photodetector and intended for use in a detection array for imaging applications. The detectors used in the thermal or infrared imagery, are traditionally realized in form of an array of elementary detectors, forming image points or pixels, in one or two dimensions. A pixel is then an elementary detector assembled in 1D or 2D array to catch an image of the scene and the pixel size or pixel period is the period of the 1D or 2D array of pixels forming the focal plan array (FPA).

The invention relates in particular to a core-shell structure supporting the two fundamental functions of a bolometer: (1) absorb the incident electromagnetic radiation by the optical antenna constituting the core and (2) measure the temperature of the absorber by the thermal properties of the shell (for example its electrical resistance varying with the temperature).

### State of the art

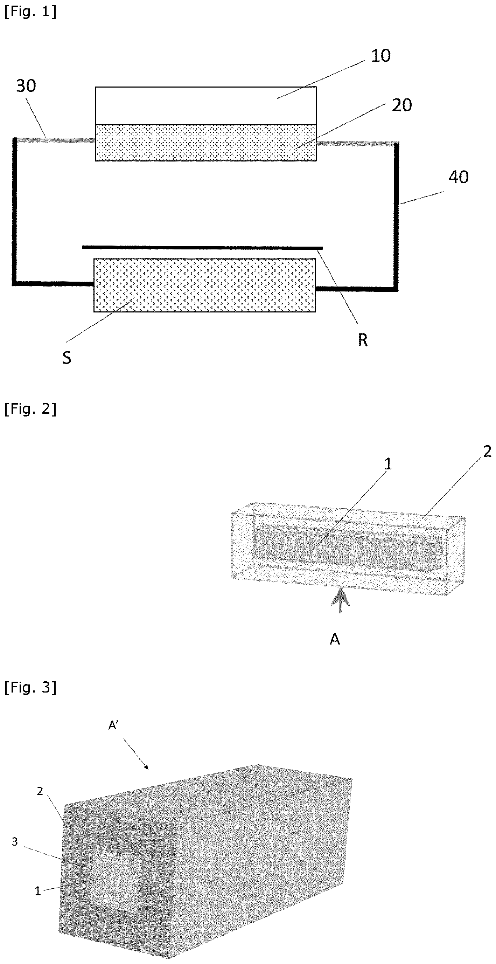

The bolometers are used to measure the power of the incident electromagnetic radiation. As illustrated on figure 1, they consist in a support substrate S carrying a Read Out Integrated Circuit (ROIC embedded in the support S) and a reflector R, an assembly of an element for absorbing the incident radiation 10 and a thermometric element 20 in thermal contact with the absorber, this assembly being positioned away from the reflector R, typically at a quarter of the incident wavelength where the electric field of the standing wave is maximum. The heating of the absorber 10 due to the incident radiation allows the heating of the thermometric element and the measurement of this heating. This measurement is provided by the ROIC. To ensure the thermal isolation of the assembly of absorbing element and thermometric element, they are suspended under vacuum above the substrate S via thermally insulating arms 40. These arms provide also mechanical support and electrical connections between the thermometer and the ROIC. The figure 1 represents schematically such a bolometer detector. The substrate S usually incudes means for sequential addressing of elementary detectors and means for electrical excitation and pre-processing of electrical signals generated from these elementary detectors.

These detectors use mainly the silicon technology and operate at room temperature. This allows their manufacture and their operating at very advantageous costs compared to other photodetectors such as quantum detectors that need to be cooled for long wavelength detection.

To measure the thermometer temperature, these detectors such as those described in WO-A-2021009421 traditionally use the variation of a physical parameter of a suitable material or material assembly(s), depending from temperature, around 300K. In the particular case of the most commonly used bolometer detectors, this physical parameter is electrical resistivity, but other parameters can be used, such as dielectric constant value, polarization, thermal expansion, refractive index, etc.

Thus, an elementary detector or resistive microbolometer is commonly used, especially in civilian applications (home automation, driving car or flying assistance, night vision, diagnosis of fire departures, etc.).

Such a microbolometer is particularly adapted for infrared detection and more particularly for the spectral range 8-14 µm (also called LWIR or band III), corresponding to one of the spectral bands of transmission of the atmosphere in which the thermal emission of objects at about room temperature or that of living beings can be observed.

These bolometers are likely to operate at room temperature, i.e., without the necessity to cool them to very low temperatures, on the contrary of the detection devices called "quantum detectors" or "cooled detectors" that only operate at very low temperature.

Such a microbolometer comprises a membrane in form of an assembly of absorber-thermistor, consisting of a layer of an absorber element, a layer of a thermometric element or thermistor in good thermal contact with the absorber element, and a support substrate above which the membrane is suspended. It also comprises thermal isolation arms and electrical connecting elements for electrically contacting the thermometric element with the contact pads of the support substrate. The supporting substrate, for example in silicon, provides mechanical rigidity to the microbolometer and reading circuits of the resistance of the thermometric element. It is usually covered by a reflector to build a standing wave with the incident radiations. It is worth to mention that the absence of a reflector provides a reflection that can be large enough for some applications. The absorption of the incident photon flux in the absorber tends to increase its temperature according to Joule's law. The thermistor allows an electrical measurement of this temperature. The thermal insulation of the absorber-thermistor assembly in relation to the support substrate (by means of thermal insulation arms and isolation vacuum maintained around the absorber-thermistor assembly) increases the sensitivity of the device by increasing the rise of the temperature of the absorber-thermistor assembly for a given photon flux.

The absorber element in classical technologies may consist of a thin metal layer, but it is important to note that the other constituents of the suspended membrane (thermometer, insulation arm) also contribute, to a lesser extent, to absorption. The thermistor is generally a resistor consisting in a material chosen for its strong variation in resistivity with temperature, for example, vanadium oxide (VOx) or amorphous silicon (a-Si). The thermal insulation arms are for example made up of mechanical and electrical links exhibiting low thermal conductance, positioning the absorber-thermistor assembly in suspension in an insulation vacuum, above the substrate carrying the reflector.

To obtain a view with these detectors, the scene is captured on the elementary detectors array, through adapted optics. Cadenced electrical stimuli are applied by the ROIC to each of the elementary detectors or to each row of such detectors, in order to obtain electrical signal forming the picture of the reached temperature by each of the elementary detectors. This signal is treated, more or less elaborately, by the ROIC and then possibly by an electronic device, outside the case in order to generate a picture of the radiation emitted from the observed scene, commonly called thermal image.

The currently available microbolometers are limited, mainly by the speed-sensitivity compromise and the pixel step reduction.

The operation of bolometers can be broken down into three steps:
1. The incident radiation is absorbed by an infrared radiation absorber isolated from the rest of the world (except the thermometer), so it is heated.
2. This heating is transmitted to the thermometer placed in good thermal contact with the absorber.
3. The measurement of the rise of the temperature (ΔT) of the thermometer is a measurement of the incident flux power (Pinc), which makes it a photo-detector.

Thus, to increase the sensitivity of the bolometer, it is necessary to increase the temperature of the thermometer, i.e, for a given absorber, increasing the thermal resistance (Rth) of the thermal isolation (isolation arms, vacuum, and radiations) separating it from the rest of the world, the temperature difference with the support being ΔT = Rth Pinc where Pinc is the incident power. On the other hand, to increase the speed of the bolometer it is necessary to reduce the thermal resistance since the time constant (τ) of the bolometer is written: τ = Rth Cth, wherein Cth is the thermal capacity of the absorbent- thermometer assembly. The design of a bolometer is thus based on a compromise between speed and sensitivity with a merit factor ΔT/τ = Pinc/Cth. It is therefore desirable to minimize the thermal capacity Cth in order to shift the compromise towards faster and/or more sensitive bolometers.

As already mentioned, the bolometers currently available in the market, are in the form of an absorber - thermometer assembly generally consisting of a membrane (continuous or structured) that covers the largest possible part of a pixel to optimize absorption, which leads to a significant value of the thermal capacity (Cth) of this assembly. The speed - sensitivity compromise then results in a slow bolometer (acquisition frequency 30 - 50 Hz) and low sensitivity (NETD 40 - 50 mK). NETD stands for Noise Equivalent Thermal Difference. This parameter corresponds to the smallest temperature difference detectable in the scene by a detector. In order to reduce the thermal capacity, WO2021009421 proposed that the surface of the thermometric material is less than 0.4 times that of the membrane, and in areas where the thermometric material is absent, recesses are made (i.e. in the absorber). Such a membrane reduces the thermal capacity for a constant thermal resistance. However, this document does not propose any solution for the problem of the respective surfaces of the arms (Rth) and membrane (ΔT), which constraints the compromise speed - sensitivity, particularly for small pixel sizes.

The current practice is also to reduce the pixel size from about 50-100 µm in the 1990s to about 10 µm today. This has permitted to decrease the detector size (thus to decrease its fabrication cost). In the same way, the number of pixels has been increased. This practice, although constant over several decades, is slow as, with each new pixel step value, the speed - sensitivity compromise must be completely revised. The increase in the number of pixels in the detector array results in a decrease of the incident electromagnetic energy flux per detector. Maintaining pixel sensitivity therefore requires an increase in the spatial occupancy rate of the absorber while the pixel area is reduced. This makes it difficult to provide thermal insulation arms that match the desired speed - sensitivity compromise.

The document FR-A- 2 977 937 proposes a bolometer detector for the thermal detection of the incident radiation in a given spectral band, comprising a support substrate and an assembly of microbolometers with given dimensions, arranged in a form of array, each of the said microbolometers comprising a membrane suspended above the supporting substrate by support elements, said membrane being constituted by an absorber element of the incident radiation and the thermometric element being in thermal contact with the absorber, electrically isolated from the absorber element. It also comprises electrical connection elements of said thermometric element with the support substrate. The absorber element consists in a metal-insulator (dielectric)-metal (MIM) structure comprising a stack of three superposed layers, having submicronic thickness, i.e. a first metal layer, a dielectric material layer and a second metal layer. This MIM structure forms an optical antenna and is adapted to generate plasmonic resonance with the incident radiation for at least one wavelength of the spectral band, the microbolometer surface covered by said membrane being less the half of the whole surface of the microbolometer.

In such a bolometer, the MIM structure is better excited if the formed antenna is placed in one of the maxima of the magnetic field of the stationary wave created by the reflector, i.e for the shortest one to a half-length of the wave of the reflector. This distance is not compatible with the existing microbolometers.

In the thesis " Novel concepts for theoretical and applied problems of electromagnetism. Part 1: Absolute representation of the fields in the spacetime map. Part 2: Low-volume optical antennas for bolometer applications". Electromagnetism. Université Paris-Saclay, 2021. English. NNT: 2021UPASP129.tel-03679218, by Marina Yakovleva, an Insulator-Metal-Insulator (IMI) structure is described as a good optical antenna for infrared absorption in a bolometer. The studied structure is constituted by a gold layer interposed between two dielectric materials (insulators) one being a silicon membrane and the upper layer being the air or the vacuum. The studied behavior of this test structures has been generalized to other materials through general physic laws. The analysis shows that the IMI structures can be utilized in form of periodic arrays of IMI antennas positioned at a distance of about λres/4 (i.e., at typically 2.5µm for the 8-14 spectral band) above the reflector carried by the substrate and that a whole absorption can be obtained by an antenna working as an electromagnetic radiation absorber element extending on a small part of the antenna period.

Other types of optical antenna (MIM structures with different geometries) have been studied but none of them provides satisfying results concerning the reduction of the antenna volume thus the reduction of the thermal capacitance.

### Description of the invention

Consequently, the aim of the invention is to provide a design of a structure in which the electromagnetic radiation absorber element permits to maintain a low thermal capacity, the structure being appropriate to measure precisely the temperature and to provide a small footprint in the pixel to leave room for more efficient thermal insulation arms.

For this purpose, a first object of the present invention is a core-shell structure for bolometric detector wherein:
- the core consists of a metal element, forming an absorber element for the incident electromagnetic radiation to be detected
- the shell being constituted of an optical dielectric material covering the metal core,
said core/shell structure providing a thermometer function to measure the temperature of the absorber.

Advantageously, the core-shell structure is a structure supporting the two fundamental functions of a bolometer:
(1) absorb the incident electromagnetic radiation by an IMI (Insulator-Metal-Insulator) antenna constituted by the metal element forming the core and
(2) measure the temperature of the absorber.

Preferably, this core-shell structure is suspended above the substrate covered by the reflector. But the core/shell structure could also be laid on a wider supporting structure, for example a structured membrane or even, the lower part of the shell could be part of this support.

The IMI antenna is the metallic part of the core-shell structure that provides the absorption function of the core-shell structure.

Advantageously, the optical antenna allows absorption in the core-shell structure. But as, at the resonance, the optical antenna concentrates the electromagnetic field in a small volume around it, that exalts the absorption on the one hand in the metal (Joule effect) and on the other hand in the optical dielectric materials surrounding it (e.g., the shell) when this dielectric material has a non-null imaginary part of its optical index.

The outer part of the core-shell structure made of an optical dielectric material (i.e., the shell) can continuously covering all sides of the IMI antenna or it also can cover only a part of it.

The optical dielectric material means a material having a positive real part of the permittivity in the wavelength range of interest (frequencies higher than 10 THz). In addition, this material allows electric charges to flow when a bias voltage at low frequency (less than 10 kHz) is applied. Semiconductor materials are typical optical dielectric materials, as shown for example for doped silicon in the document S. Basu, B.J. Lee, and Z.M Zhang, Infrared Radiative Properties of Heavily Doped Silicon at Room Temperature, Journal of Heat Transfer, 132, 023301 (2010), doi: 10.1115/1.4000171.

The optical dielectric material offers both functions of the core-shell structure: field confinement for better absorption and electrical resistance for the thermometer.

The core-shell structure according to the invention provides an optical antenna with significantly reduced volume and footprint while offering a maximal thermal contact between the shell providing the thermometric function and the metallic core. This core-shell structure provides reliable measurement of the temperature of the IMI antenna, as the shell is in good thermal contact with the absorber element.

Bolometers with IMI antenna have maximum sensitivity when the antenna is at a distance of about one quarter of the wavelength from the reflector of a bolometer and this is compatible with the current bolometer technology.

The core-shell structure has configurable characteristics according to, in particular:
the type of the metal constituting the metal element;
the geometry of said metal element;
the type of the optical dielectric material constituting the shell;
the thickness of the shell covering the electromagnetic radiation absorber element.

The IMI antenna of the core-shell structure offers several degrees of freedom to adjust the characteristics of the antenna according to the necessities of the intended application.

The geometry of the IMI antenna defines the spectral answer. The length L of the antenna IMI (Length of the metal element) allows defining the resonance wavelength λres that can be approximated by the following equation:
Ares ≈ 2L*neff wherein neff is the effective index of the mode.

The IMI antenna, in the simplest geometry, has the shape of a parallelepiped bar, with rectangular, square, or oval section. The absorption of the antenna depends on its width and thickness. These parameters are adjusted in function of the value of the period of the antenna array in order to absorb 100% of the incident radiation at the resonance (critical coupling conditions).

The choice of the metal for the core also influences the resonant wavelength and the peak width.

The metal is a metal supporting surface plasmon polariton (SPP) modes like: silver, gold, copper, aluminum, doped aluminum, aluminum alloys, titanium, titanium nitride. The aluminum is preferred for the silicon technology of bolometers.

The core shell structure is in the form of:
a rod designed for applications requiring sensitivity to the polarization of the incident light, a cross, a "L", a "V" a disc, or a square-designed for the applications requiring insensitivity to the polarization of the incident light.

The core-shell structure according to the invention provides an optical antenna with a reduced length. The optical dielectric material is characterized by its optical index where its real part is superior to 1. As this material surrounds the IMI antenna, the effective index of the mode (neff) is significantly increased compared to the IMI antenna with no shell, for a given resonance wavelength, the length of the IMI antenna is reduced. The higher, preferably higher than 1.5, is the real part of the index of the optical dielectric material, the smaller is the antenna length.

The length of the core-shell structure according to the invention is consequently reduced as compared with an IMI antenna alone while the occupied area is slightly increased but remaining at a negligible level (i.e., a few percent of the pixel surface).

The shell is a layer of optical dielectric material thus it can also provide the thermometric function. This shell in good thermal contact with the core provides the thermometer function of the core-shell structure either alone or in combination with the core.

According to an embodiment of the invention, the metal element provides the thermometric function by the electrical properties of the metal element such as its electrical resistance varying with the temperature.

According to an embodiment of the invention, the shell provides the thermometric function by the electrical properties of the optical dielectric material forming the shell such as its electrical resistance varying with the temperature. The optical dielectric material can be chosen among materials having an electric resistivity varying significantly with the temperature, i.e. the optical dielectric material having an appropriate temperature coefficient of resistance (TCR), like amorphous silicon. The thermometer function is then provided by the electric resistance varying with the temperature of the optical dielectric material forming the shell.

According to another embodiment of the invention, the thermometer function is provided by the adjustment of the electrical and optical properties of the shell and/or the core , by modifying at least one part of the optical dielectric material by treatment like thermal treatment, doping, alloying, for example the part of the shell closest to the IMI antenna. This part has thermometric function relative to other parts of the shell that are extended to be support, electrical access and insulation arms.

The optical dielectric material has preferably an optical index larger than 1.5 like germanium, silicon, silicon/germanium alloy, or vanadium oxide. From an electromagnetic point of view, Si, Ge, Si/Ge are the most advantageous materials and from the TCR, VOx is the most advantageous material.

Furthermore, the shell covering the IMI antenna can have a constant thickness. A modification of the thickness of the shell modifies the effective index of the mode (neff), the volume of the optical antenna and consequently, the thermal capacity of a bolometer integrating the core-shell structure. Thus, the thickness of the layer of the optical dielectric material, is in the range from 0 to few hundreds of nm when the antenna cross-section of the IMI antenna is low, typically a few dozen of nm.

Adjusting the thickness of the shell provides a high flexibility for the conception of the core-shell structure for bolometer applications. The thickness of the shell is a free parameter that permits to define:
(1) the thermal capacity of the core-shell structure in dependence of the desired application,
(2) the electrical resistance of the thermometer when the material of the shell forms the thermistor element.

In addition, the thickness of the shell may be not constant.

According to an embodiment of the invention, the core-shell structure has an electric insulator layer interposed between the metal core and the optical dielectric material shell, forming a double shell structure. Such a core-shell structure is said double shell structure. This layer of electric insulator provides a more precise measurement of the electrical resistivity of the shell by reducing the current part circulating in the metal. Indeed, without this insulating layer, the measurement of the electrical resistivity of the shell is affected by the metal element (the core): a significant part of the measuring current is circulating in the metal rather than in the shell.

The electric insulator layer is realized by the introduction between the metal core and the optical dielectric material shell, of a thin layer of an insulator dielectric material like SiOx, SiNx, AlOₓ, ZnS, ZnSe, or any other materials exhibiting similar electrical properties. In this manner, the measuring current only circulates in the shell; the temperature impact on the measurement will be stronger as the TCR of the material of the shell is higher than the one of the metals.

It is important to note that the introduction of an electric insulator material based on nitride or oxide highly changes the electromagnetic behavior of the core-shell structure. Actually, the optical index of these materials is low (typically between 1.4 and 2) relative to the one of germanium (n > 4) or silicon (n > 3.7). This results in an exaltation of the electromagnetic field in the insulator material to the detriment of the other materials in the system core-shell. Moreover, some of these materials, in particular SiO₂, have a near zero permittivity at certain wavelengths in the spectral range of thermal imagers (between 8 and 14 µm). This is the ENZ effect that could lead to the suppression of the resonance of the optical antenna and thus of the absorption of the core-shell structure. The effect can be useful for prohibiting the absorption in a spectral range. On the contrary, the use of other materials for the electric insulation between the shell and the core (IMI antenna) such as silicon in the case of a germanium shell is preferred. The heterojunction silicon-germanium has a large discontinuity in the valence band with respect to the thermal energy kT, that allows holes to be kept in the germanium shell.

As previously mentioned, the shell of the core-shell structure can provide the thermometric function as the optical dielectric material has an appropriate TCR, but this thermometric function can also be provided in different ways. Actually, the shell and/or the core can provide the thermometric function by:
- PN and Schottky junctions
- Thermoelectric effect (Seebeck)
- Pyroelectric effect.

It is then possible, by treating locally the optical dielectric material of this shell, to provide a Schottky junction between the metal of the IMI antenna and the optical dielectric material of the shell if this material is a semiconductor (e.g., silicon or germanium). This allows a measurement of the temperature by using the exponential dependence of the measured current at a given voltage with the temperature.

In a core-shell structure with double shell, the PN junction between the two shells with a N doping for the internal shell (electric insulator) and P doping for the external shell (optical dielectric material) allows the precise measure of the temperature due to the same exponential dependence of the current at the temperature. In this case, the gap variation can be combined with the doping variation with, for example, a heterojunction N doped silicon - P doped germanium.

As previously cited, the integration of the thermometric function in the shell provides two important advantages:
- The thermal contact between the metal core and the shell is optimum as it concerns the whole surface of the metal core (antenna IMI) wherein the heating (Joule effect dissipation limited in depth by the skin effect) is localized. It should be noted that if the optical dielectric material is also an absorber (imaginary part of the optical index non null) the heating is also localized in the "thermometer" itself.
- In any case, the temperature is homogeneous in the shell on the scale of the time constant of the measurement due to its small thickness. Consequently, the measure of the electric resistance of the shell for example allows a precise measure of the rise of the temperature of the IMI antenna by absorbed infrared radiation, this electric resistance depending on the geometry of the shell and of the type of optical dielectric material that constitutes it (intrinsic properties, doping level).

Advantageously, the optical dielectric material layer or shell, surrounding the metal element can also be used as mechanical support and allows the maintenance of the IMI antenna at a fixed position relative to the other antenna (maintaining the coupling with them) and relative to the reflector in a bolometric detector (position relative to the formed stationary wave).

The optical dielectric material of the shell can be configured to form extensions parts beyond the ends of the core-shell structure in order to provide mechanical support and thermal insulation functions for the core-shell structure.

The shell then present an extended form along the longitudinal axis of the optical antenna, beyond the extremities of the antenna in order to extend the mechanical function, to contribute to the thermal insulation of the core-shell and allow the electric connection between the thermometric element and the reading integrated circuit. These extension parts can be realized with a geometry different of the shell geometry (for example a different cross-section, a different length or different shape) and/or with the optical dielectric material having modified electrical and/or thermal properties (for example by doping the optical dielectric material to adjust the thermal resistivity of the material).

Furthermore, the extensions of the shell allow the connection of said core-shell structure to the support elements in order to maintain it in a plane to a fixed distance above the reflector.

IMI antennas with a rod-geometry are used for application requiring a sensitivity to the polarization of the incident light since their response is very sensitive to this polarization.

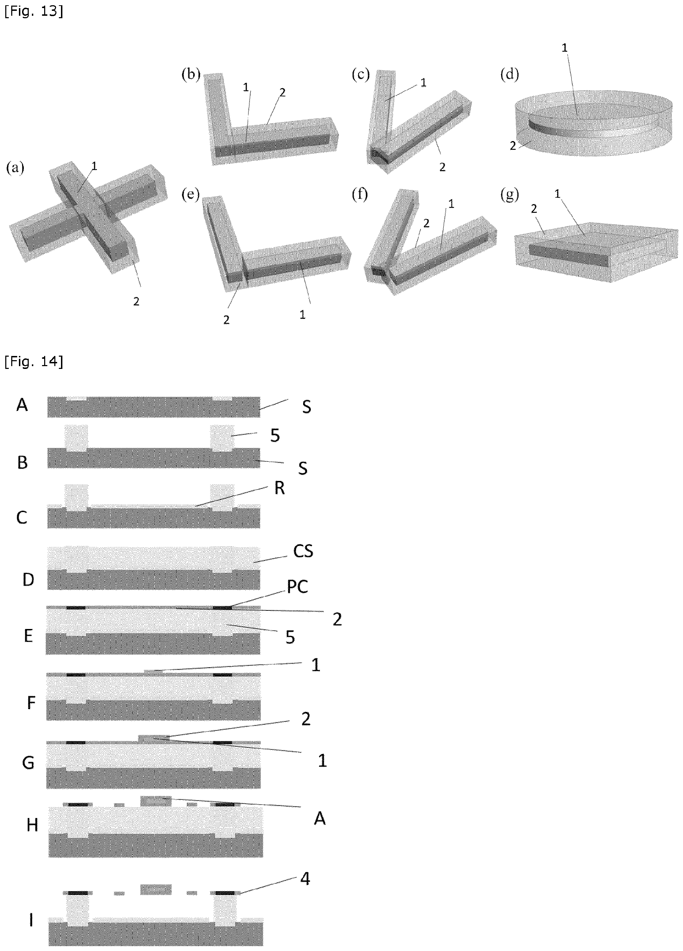

For the applications requiring insensibility to the polarization of the incident light, the core-shell structures according to the invention can present sensitivity to the two components of the electric field in the plane of the structure such as structures in the shape of cross, "L", "V", disc, or square, etc. as it is can be seen in Fig. 13.

A core-shell structure according to the invention offers a progress way to develop bolometric detectors having improved integration possibilities.

A second object of the invention is a bolometer detector for detecting electromagnetic radiation, comprising a support substrate, characterized in that it comprises at least one core-shell structure per pixel, consisting in a metal element forming an electromagnetic radiation absorber element, wherein said metal element forms the core of a core-shell structure, the shell of which being constituted by an optical dielectric material, covering the metal element, said core/shell structure providing a thermometer function to measure the temperature of the absorber, the core-shell structure being suspended by support means above the support substrate.

Then, the structure and the form of the core-shell structure according to the invention advantageously provides a bolometric detector in which the area of the pixel occupied by the absorber element is strongly reduced relative to the classic bolometric detector, that permits the use of several optical antennas in the same detector, so in the same pixel.

When the pixel size is larger than the operation wavelength or close to it, the bolometer can comprise more than one core-shell structure in one pixel.

The extension parts of the shell in the core-shell structure allows the electrical connection between the core/shell structure and a read out integrated circuit integrated on the substrate.

The detector also comprises electric connection elements to connect the core-shell structure to the support substrate that comprises Read Out Integrated Circuits (ROICs) embedded in the support for the reading of the temperature in the core-shell structure. The substrate elements for the core-shell structure comprise thermal isolation arms and pillars comprising at least an electric conductor material to ensure the electric contact of the thermometric element with electric connecting pads of the ROIC.

The insulation arms are elements of high thermal resistance allowing both the maintenance of the suspended structure, its thermal insulation and the electrical connection between the ROIC and the thermometer element of the core-shell structure. The pillars are vertical structures allowing (1) the positioning of the suspended structure (core-shell structures of the invention) at the correct distance from the reflector R, (2) the electrical contact between the insulation arms and the ROIC. They are generally metallic. There is a pillar in at least two corners of the pixel corresponding to the two electrical contacts needed for the measurement, they also ensure the stability of the suspended structure.

The electrical connections and more generally the thermal insulation arms absorb the incident radiation. It is considered as a defect of the bolometers of the prior art. The insulation arms have a reduced optical absorption due to the funneling effect which concentrate the electromagnetic fields close to the antenna. The funneling effect can also leads to decrease of the optical leaks through the substrate. Due to these reductions of the parasitic absorption and leaks, the useful absorption is increased, and thus the heating of the thermometer increase, i.e an enhanced signal is expected.

As previously mentioned, the variation of the thickness of the optical dielectric material lateral layer forming the shell induces the variation of the volume of the antenna and so a variation of the bolometer thermal capacity.

Such an integrated structure of the core-shell structure optimizes:
a. a reduction of the volume of the "hot" part of the bolometer, i.e., of its thermal capacity. The antennas IMI forming the core part of the core-shell structure having a smaller volume than the volume of already presented for bolometer absorber antennas or than the state-of-the-art bolometer absorbers. It results that for the detector according to the invention the compromise between speed and sensitivity can be revisited leading to a faster detector or a more sensitive detector or a faster and more sensitive detector.
b. an optimization of the thermal contact between the absorber element (the «core» part of the core-shell system) and the thermometer (the «shell» part of the same system)
c. a possible increase of the thermal resistance of the insulation arms due to a larger free space in the pixel.
d. a possible reduction in the pixel size keeping both an absorption efficiency close to unity at resonance and an efficient thermal isolation owing to a sufficiently free space around the core-shell structure.
e. the possibility to place several core-shell structures in each pixel in order to enlarge the sensitive area or/and to be sensitive to various wavelengths.
f. the occupation of the area of the pixel by the absorber element being strongly reduced relative to the classic bolometric detector, offers more place for insulation arms. This last point is important because it facilitates pixel pitch reduction, the main objective of all manufacturers.

The reduction of the volume is very interesting as it is reduced by several orders of magnitude compared to existing commercial products, and so, also the reduction of the thermal capacity of the detector.

The spectral response of the bolometer which was almost flat for conventional structures could become structured with the invention. Structuring on demand is possible by combining several antennas.

Several applications can be envisaged such as, for example, (1) a multi-spectral camera (or in «color») in the infrared, (2) the elimination of a part of the spectrum considered as annoying (for example the band around 4.2µm due to CO₂ absorption) for imaging in the MWIR band (3 -5 µm).

At the resonance, the absorption of the antenna is 100% of the incident power per period in critical coupling conditions, compared to the 70-80% for the current bolometers. The critical coupling conditions are the conditions on which the incident power is equal to the absorbed power, the reflected in the far field power is thus equal to zero. For a given incident power and antenna period, these conditions can be reached by adjusting geometric parameters of the core-shell structure as, the IMI antenna section (its width and its thickness) and the shell thickness.

For applications requiring insensitivity to polarization, the simplest parallelepiped bar shaped antenna can be replaced by antennas sensitive to the two components of the electric field in the plane of the structure such as antennas in the shape of cross, "L", "V", disc, or square, etc. In these cases, the concept of core-shell structure, presented in this invention, is applicable with the same advantages as those described for simple antennas.

The bolometric detectors of the invention are sensors of the electromagnetic radiation, primarily for infrared imaging in the 8-14 µm wavelength band, commonly referred as thermal imaging. They can also be used at other wavelengths, for example in the band from 3 to 5 µm (transparency window of the atmosphere), at 20-30 µm for imaging cold objects or in the THz range.

An object of the invention is also a method of manufacturing of a bolometric detector according to the invention. Such a method comprises the following steps :
A : fabrication of the read out integrated circuit (ROIC) on a silicon wafer constituting the support substrate;
B : deposition of the pillars;
C : optionally, deposition of a reflector
D : deposition of a sacrificial layer
E : deposition of contact on the anchor elements and layer of dielectric material to form the internal part of the shell ;
F : deposition of one or several metal element 1 forming the antenna
G deposition on the metal element of a new dielectric material layer to totally cover the metal element and forming the shell around the metal element;
H : definition of the insulation arms
I: removing of the sacrificial layer .

Other features and advantages of the invention will become apparent on reading the following description, illustrated by the figures which show:
[Fig. 1] a schematic view of a bolometric detector illustrating the different basic functions of its operation according the state of the art;
[Fig. 2] a perspective front view of a core-shell structure according to one embodiment of the invention;
[Fig. 3] a perspective side view of a truncated core-shell structure with a double shell according to another embodiment of the invention;
[Fig. 4] a schematic view illustrating the position of the core-shell structure according to the figure 2 relative to a mirror (and the substrate);
[Fig. 5] a perspective front view of an example of the bolometric detector according to the invention comprising four core-shell structures per pixel;
[Fig. 6a] a graph showing the absorption spectrum of an IMI antenna in aluminum placed at 2.5µm above a reflector as function of the incident radiation wavelength.
[Fig. 6b] a graph showing the areal filling factor of an IMI antenna in an antenna period at the critical coupling as a function of the structure area (w*l); for IMI antenna in aluminum with varied geometrical parameters which is placed at 2.5µm above a reflector;
[Fig. 7a] a graph showing the absorption spectrum of a core-shell structure, with 100 nm Ge shell, placed at 2.5µm above a reflector as a function of the incident radiation wavelength;
Fig. 7b] a graph showing the areal filling factor of a core-shell structure in an antenna period at the critical coupling as a function of the structure area (wₜₒₜ*lₜₒₜ), here wₜₒₜ=w+2*h incudes the core width and the shell thickness on the two sides, same for the length lₜₒₜ=l+2*h;
[Fig. 8a] a graph showing the variations of the IMI antenna resonant length and the core-shell structure length as a function of the thickness of the shell;
[Fig. 8b] a graph showing other variations of the IMI antenna length as a function of the thickness of the shell;
[Fig. 8c] a graph showing the areal filling factor of the core-shell structure in an antenna period as a function of the thickness of the shell;
[Fig. 9] a graph showing the volume of the core-shell structure as a function of the thickness of the shell;
[Fig. 10] a graph showing the normalized electrical resistance of the shell as a function of the shell thickness;
[Fig. 11] a graph showing the absorption spectra for different metals forming the core of a core-shell structure, with a shell in germanium having a thickness of 100 nm;
[fig. 12a] a graph showing the variation of the real part of the effective index (n_{eff}) of the excited mode as a function of the shell thickness for different permittivity of the material forming the shell;
[Fig. 12b] a graph showing the variation of the imaginary part of the effective index (n_{eff}) of the excited mode as a function of the shell thickness for different permittivity of the material forming the shell;
[Fig. 13] examples of different forms of the core-shell structure according to the invention ; and
[Fig. 14] the steps of the method of manufacturing of an example of a bolometric detector according to the invention.

In order to clarify the detailed specification, different terms are here explained:
The figure 2 represents a schematic view of a core-shell structure A according to the invention. The core 1 is a metal element and is the metallic part of an IMI antenna forming the electromagnetic radiation absorber. The shell 2 is in an optical dielectric material and totally covers the core 1 in metal. The shell 2 provides a thermometric function and according to one embodiment of the invention, the optical dielectric material is chosen to form a thermometric element and has a high TCR to this purpose.

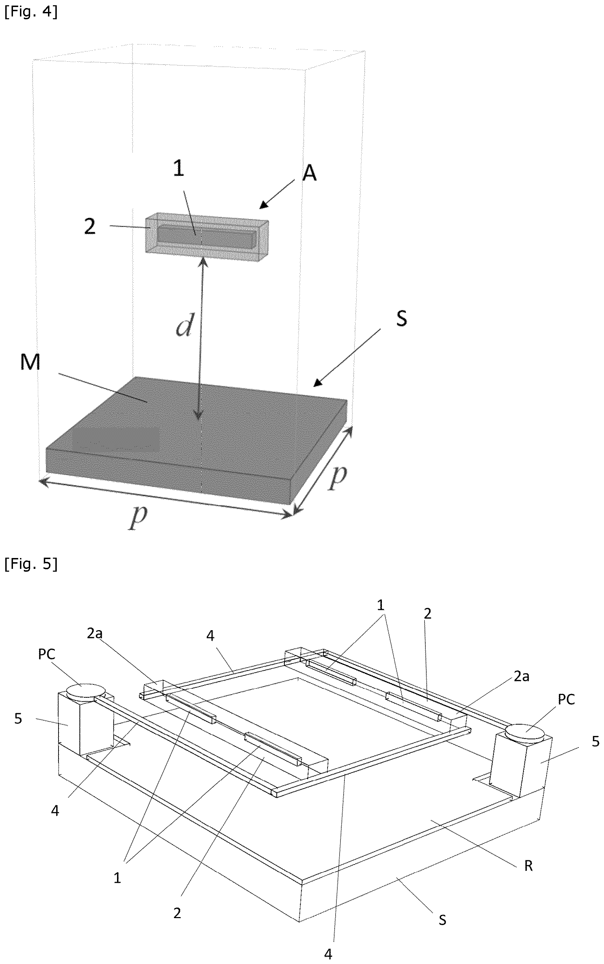

Such a core-shell structure is used in bolometric detector working in a similar way as one described in the schematic figure 1, where core-shell structure replaces the usually used membrane including all the principal layers (e.g. absorber and thermometer). This detector comprises electric connection elements to connect the core-shell structure A to the support substrate S. This support substrate S is in silicon and ensures the mechanical rigidity to the detector and comprises Read Out Integrated Circuits (ROICs) embedded in the support S for the polarization and reading of the temperature of the core/shell structure A. The support elements for the core-shell structure A comprise thermal isolation arms 4 and pillars 5 (as presented in the example of figure 5), comprising at least an electric conductor material to ensure the electric contact of the thermometric element with electric contact pads PC of the read out integrated circuit on the support substrate. The isolation arms 4 are elements of high thermal resistance allowing both the maintenance of the suspended structure, its thermal insulation and the electrical connection between the ROIC and the thermometer element of the core-shell structure A. The pillars 5 are vertical structures allowing (1) the positioning of the suspended structure (core-shell structures of the invention) at the correct distance from a reflector R positioned on the substrate S, (2) the electrical contact between the insulation arms 4 and the ROIC. They are generally metallic. There is a pillar 5 in at least two corners of the pixel to ensure the stability of the suspended structure.

The support substrate S may be covered by a reflector R like a mirror deposited on top of the ROIC and used to build a standing wave with the incident radiation. It is usually made of metal. This reflector is spaced away from the core-shell structure A with a distance d, which is usually around λᵣₑₛ/4 where λᵣₑₛ is the operation wavelength of the detector.

An example of the bolometric detector according to the invention is illustrated in figure 5. It comprises four core-shell structures A in one pixel: the pixel period is twice larger than the antenna period. The shells 2 are in an optical dielectric material and have extended parts 2a to contact the isolation arms 4, ensuring the mechanical support of the core-shell structure A, the thermal isolation and the electric connection of the core-shell structure A with the ROIC.

According to another embodiment of the invention, the core-shell structure A' in figure 3 has a core-double shell structure. The second shell 3 is an electric insulator placed between the metallic core 1 and the optical dielectric material shell 2. In the core-shell structure A, the measurement of the electric resistivity of the shell can be altered by the presence of the metallic core 1 as a significant part of the measuring current circulates in the metal core 1 rather than in the shell 2. Consequently, the layer of electric insulator 3 provides a more precise measurement of the electrical resistivity of the shell.

The electrical insulation can be realized by the introduction between the core 1 and the shell 2 of a thin layer of electric insulating dielectric material like SiOx, SiNx, AlOₓ, ZnS, ZnSe or other electrical insulating materials. In this manner, the measure current circulates only in the shell 2 and the temperature impact on the measurement is then stronger, the TCR of the shell material being higher than the one of the metal.

The core element of core-shell structure A or core-double shells structure A' constitute an IMI antenna and is sensitive to the electric component of the electromagnetic filed surrounding it. These IMI antennas exhibit maximum sensitivity being at a distance d of around a quarter of the operating wavelength, relative to the reflector R. As the distance d is d = λ/4, the structures A or A' are compatible with the existing technology of bolometers.

The spectral response of the IMI antenna of the structure A is defined by its geometrical design. The length L of the metal core 1 (which is the IMI antenna) defines the resonance length λres, which can be approximated by: λres ≈ 2L*neff wherein neff is the effective index in the mode. It is worth to notice that the nature of both metal and optical dielectric materials has also an impact on the resonance wavelength (they influence neff) and on the resonance width.

The section (cross-section) of the metal core 1 is the product of the thickness (t) with the width (w), and defines the absorption of the IMI antenna. The section can be adjusted according to the antenna period value in order to present a total absorption of the incident electromagnetic radiation at the operating resonance wavelength (critical coupling conditions). The antenna period is the period of the antenna array to cover a sensitive area at the corresponding wavelength. This area can be that of pixel, a group of pixels or the entire FPA. If the antenna period is larger or equal to the pixel size, it would lead to only one antenna per pixel. The critical coupling conditions are the conditions on which the incident power is equal to the absorbed power, the reflected power is thus equal to zero. For a given incident power and antenna period, these conditions can be reached by adjusting geometric parameters of the core-shell structure as, the IMI antenna section (its width and its thickness) and the shell thickness. If the antenna period is smaller than the pixel size, few antennas can be placed in each pixel in order to keep a full absorption (almost 100%). However, in order to simplify the construction of the device, a smaller number of antennas per pixel can be used, this leads to a non-total absorption of the incident radiation, but the core-shell structures will still work as bolometer in this case.

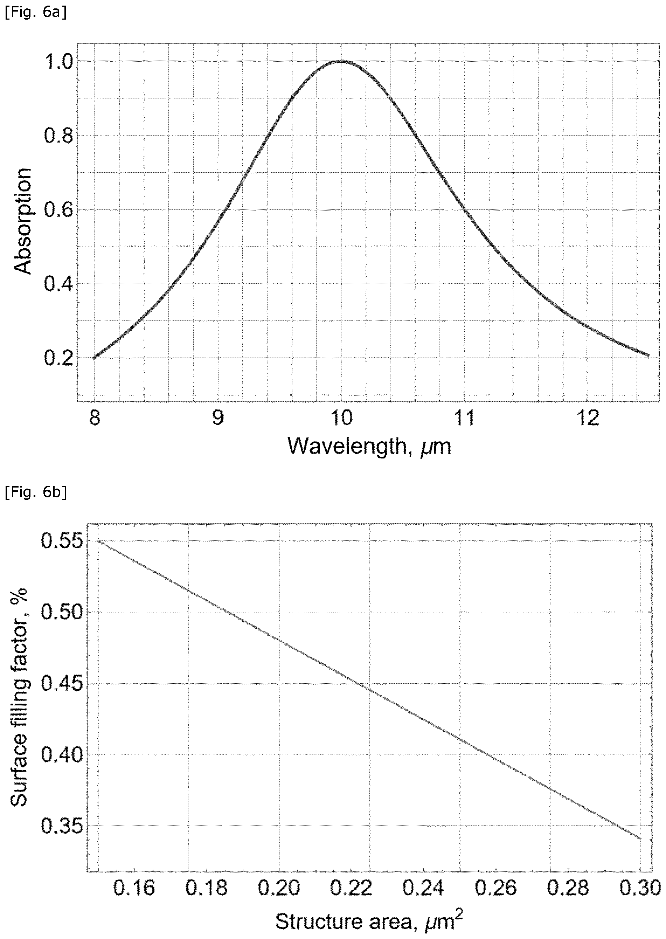

The figure 6a shows the absorption spectrum for periodic array of an IMI antenna that comprises an aluminum core 1 (IMI antenna) having a length of 4.059 µm, width and thickness of 60 nm (section 60x60 nm²), placed in a 7.7 µm periodic array, without shell and placed at a distance d=2.5 µm above the reflector R. This IMI antenna (the metal core 1 surrounded by vacuum) exhibits in the critical coupling conditions at a resonance wavelength of 10 µm. The area of the antenna (0.24 µm²) occupies approximately 0.4 % of the period area.

On Figure 6b, it can be seen that the area occupied by the IMI antenna is insignificant relative to the antenna period (less than a percent). But its length represents a major part of the IMI antenna period (53% of the preceding example, see section [0104]) that could limit the introduction of several IMI antennas of this type in each pixel for the case of pixels larger than the wavelength (see section [0103]) and/or for the case of a multi-spectral use.

The antenna filling factor is the ratio of the antenna area over the antenna period area (product of the period along the x-axis times the period along y-axis, usually the square of the period).

The figure 6b shows the areal filling factor (structure area over the period area) versus the structure area for the periodic array of the IMI antenna at the critical coupling at 10µm resonance wavelength. The antenna has a square section (the width and thickness are equal), no shell, the distance from the reflector to the antenna is 2.5µm (period is varied so the width and thickness (w=t) are varied in order to maintain the critical coupling), and the antenna length is adjusted by a few percent in order to keep the resonant wavelength at 10µm).

The core-shell structure according to the invention can reduce this length while maintaining a very low occupation of the pixel surface. Actually, the introduction of the optical dielectric material with high optical index, for example silicon or germanium, close to the IMI antenna (metal core 1) permits a significant increase of the effective index (neff), thus it reduces the length of the IMI antenna. It is worth to notice that in most cases (i.e., when the shell is thicker than a dozen of nm depending on the material index) the length of the core-shell structure is also reduced despite a dielectric material layer is added at its two ends.

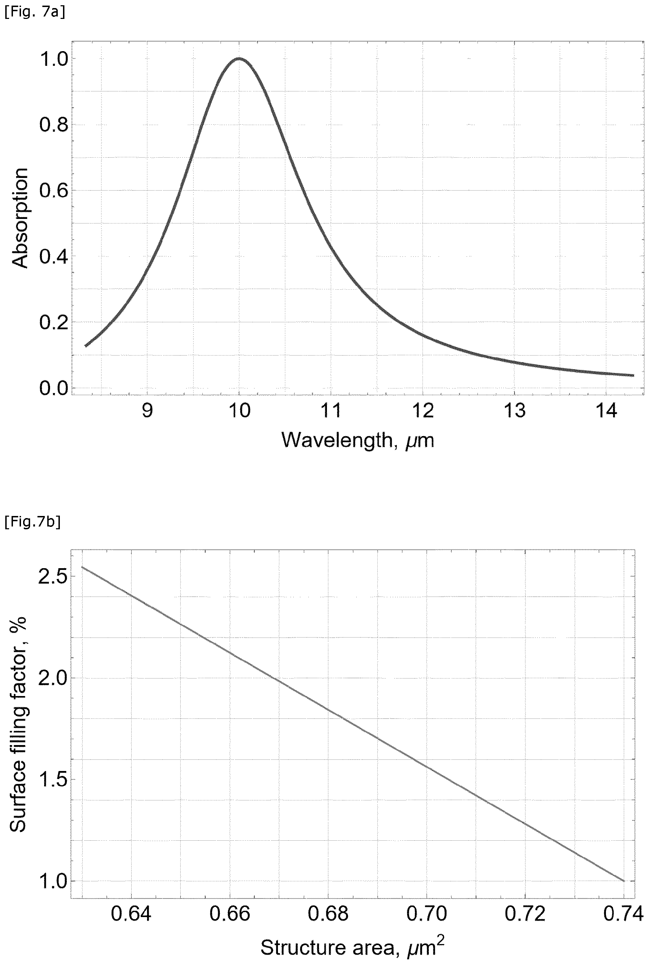

The figure 7a shows the absorption spectrum for the periodic array of the core-shell structure, with period equal to 8µm, with an aluminum core (IMI antenna) length of 2.8pm, with width and thickness of 60 nm, the shell is made of germanium having a thickness of 100 nm, and the distance from the reflector to the core-shell is 2.5µm. This IMI antenna exhibits in critical coupling conditions at the resonant wavelength of 10 µm.

The filling factor of the core-shell structure is the ratio of the core-shell footprint (top or bottom surface) over the core-shell period area (square of the period). The figure 7b shows the areal filling factor (structure area over the period surface) vs the structure area for the periodic array of core-shell structures at the critical coupling at 10µm resonance wavelength. The metal core 1 has a square section (the width and thickness are equal). The shell thickness is 100 nm, it is made of Ge, the distance from the reflector to the structure is 2.5µm. Again, the period value is varied so different IMI core width and thickness (w=t) are varied too in order to maintain the critical coupling, and the antenna length is adjusted by a few percent in order to keep the resonant wavelength at 10µm, while the shell thickness is 100 nm. The area (0.728 µm2) of the core-shell structure occupies 1.2 % of the pixel area.

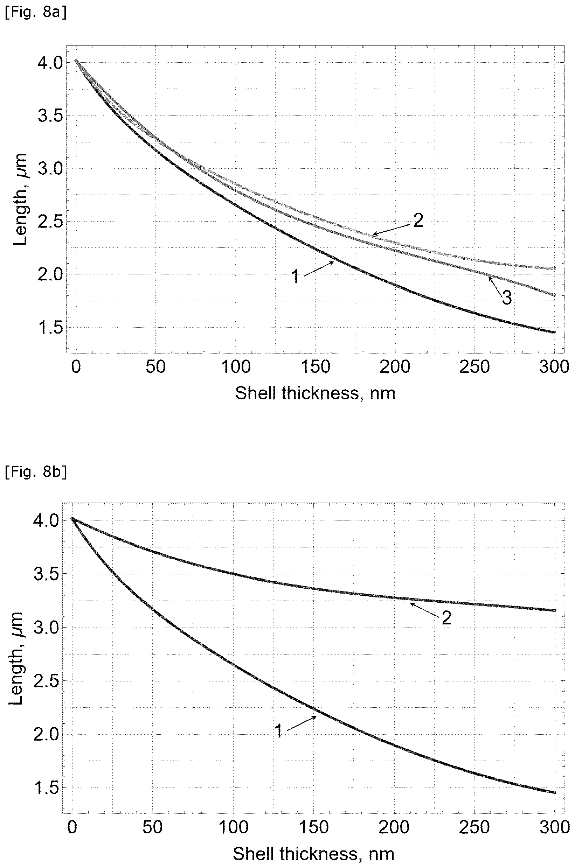

The figure 8a illustrates the device length as a function of the shell thickness for a core-shell structure periodic array. It is a core-shell periodic array with the core being made of Al and the shell of Si, with a period equal to 8µm, placed at the distance 2.5µm above the reflector, and optimized for the resonant wavelength 10µm. The figure shows three curves:
Curve 1: Length of the metal core corresponding to the resonance wavelength 10µm as a function of the shell thickness, the core cross-section being kept constant,
   w = t = 45 nm.
Curve 2: Total length of the core-shell structure corresponding to the resonance wavelength 10µm as a function of the shell thickness, the core cross-section being kept constant, w = t = 45 nm.
Curve 3: Length of the metal core corresponding to the resonance wavelength 10µm as a function of the shell thickness, the sides of the square section (w=t) of the core are varied in order to keep the critical coupling conditions (total absorption), thus the core (IMI antenna) cross-section changes from w = t = 45 nm for shell thickness equal to 0, to w = t = 100 nm for 300 nm thick shell.

The figure 8b illustrates the resonant antenna length as the function of the shell thickness for a core-shell structure periodic array. It is a core-shell periodic array with the core being made of Al and the shell of Si, with a period equal to 8µm, placed at the distance 2.5µm above the reflector, and optimized for the resonant wavelength 10µm. The figure shows two curves:
Curve 1: Length of the metal core corresponding to the resonance wavelength 10µm as a function of the shell thickness, the core cross-section being kept constant, w = t = 45 nm (identical to curve 1 of Fig. 8a).
Curve 2 corresponds to a "sandwich-like" structure where the shell layer is only below and above the metal core, no shell on the sides. The length of the metal core of the sandwich-like structure corresponding to the resonance wavelength 10µm is plotted as a function of the shell thickness. The sides of the square section (w=t) of the metal core are changed in order to keep the critical coupling conditions from w = t = 45 nm for shell thickness equal to 0, to w = t = 53 nm for 300 nm thick shell.

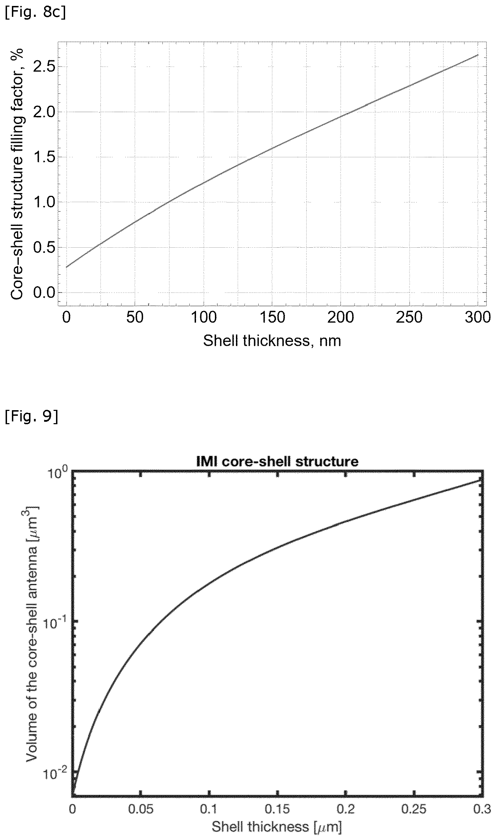

The figure 8c shows the areal filling factor of the core-shell structure as a function of the thickness of the silicon layer forming the shell 2 embedding the aluminum antenna as the core 1, at the critical coupling at the resonance wavelength of 10 µm.

It can be seen that for the same embodiment of core-shell structure, the variations of the IMI antenna length (figures 8a and 8b) and the filling factor of the core-shell structure (figure 8c) are a function of the thickness of the silicon layer forming the shell 2 embedding the aluminum IMI antenna as the core 1, at a resonance wavelength of 10 µm. It should be noted that the length of the IMI antenna (metal core part) can be reduced by a factor higher than 2, for a slightly increased filling factor. As a result, the structure area does not exceed 4% of the square of the antenna period.

The variation of the thickness of the optical dielectric material forming the shell 2 also modifies the volume of the so realized antenna and then, the thermal capacity of the bolometric detector. A high variation of the thermal capacity is possible with a thickness variation of the shell 2 between 0 and 300 nm when the section of the antenna IMI is low (typically a few dozen of nm). This provides a high flexibility for the conception of antennas adapted to the thermal capacity required for the intended application.

The figure 9 shows the total volume of the core-shell structure antenna as a function of the thickness of the shell. This example shows the thermal capacity of the shell varies by more than two orders of magnitude. This volume is still much lower than the volume of those of the state of the art, typically more than 10 µm³.

As already mentioned, the shell 2 covering the metal core 1 provides the thermometric function, either alone (e.g., its electrical resistance dependence with temperature) or in conjunction with the core (e.g., the temperature dependence of the current through the Schottky diode at the metal (core) / semiconductor (shell) interface). Consequently, this core-shell structure offers two important advantages.

First, the thermal contact between the core and the shell is optimal as the shell integrally covers the core 1 (in the embodiment of the figure 2), where the heating occurs (Joule effect dissipation deeply limited by the skin effect).

Second, if the optical dielectric material is also an absorber (imaginary part of the optical index is non null), the corresponding heating is also located in the thermometric element itself. This corresponds to the absorption of photons incident in the volume of the dielectric. It is relative to electron transitions between two states present in the dielectric material (defects, free carriers) or to phonon excitation.

On the scale of the time constant of the measurement, the temperature is homogeneous in the shell 2 because of its small thickness.

The measurement of the electric resistance in the shell 2 induces a precise and reliable measure of the temperature rise of the IMI antenna (metal core 1) heated under the infrared radiation. This electric resistance depends on the geometry design of the shell and of the nature of the used material to form it (intrinsic properties, doping level).

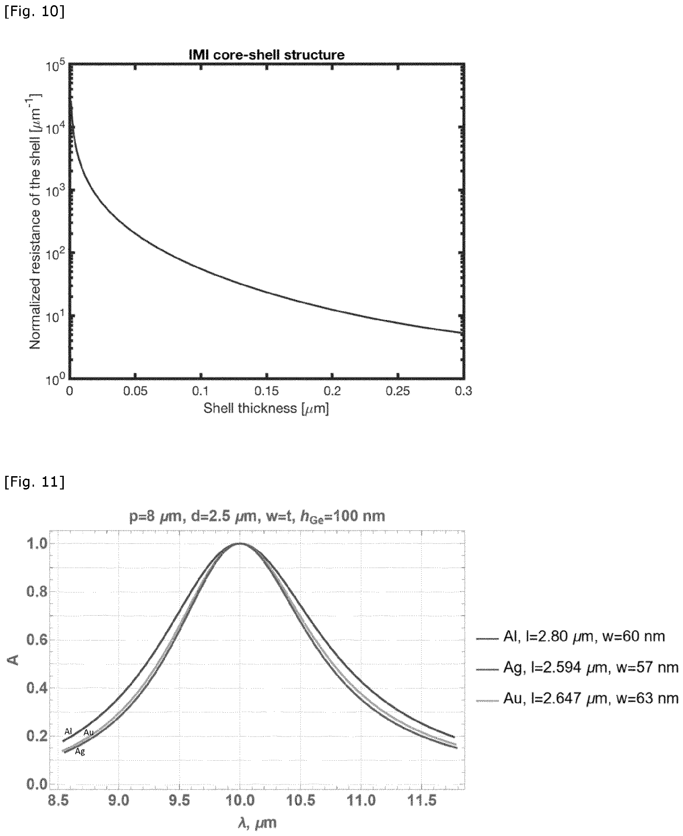

As it can be seen in the figure 10, the possible resistance of the shell normalized by the resistivity (ρ) of the used material (Rnom = R/ρ) is represented as a function of the shell thickness. It can be observed that this electric resistance varies over nearly four orders of magnitude when the thickness of the shell varies between 0 and 300 nm. This high dynamic associated with a high possible range of the shell thickness and with different materials for the shell, allows the further adjustment of the value of this resistance relative to the specifications of the ROIC.

Furthermore, when several antennas are placed in the same pixel for a unique measurement of the temperature, the variety of the possible electrical connections of these antennas increases the dynamic observed in fig. 10.

Considering the bolometric detector of the figure 5, the four core-shell structures A are placed in the same pixel and have a thermometer resistance of R. These structures A could be connected in series for a total resistance of 4R or in parallel for a total resistance of R/4 or also in a mixed disposition like series-parallel for a resistance R. In this example of installation, the connection type of the antenna offers an order of magnitude for the dynamic of the resistance to be measured by the ROIC.

Figure 11 shows the absorption spectra for different metals forming the core of a core-shell structure, with a shell in germanium having a thickness of 100 nm.

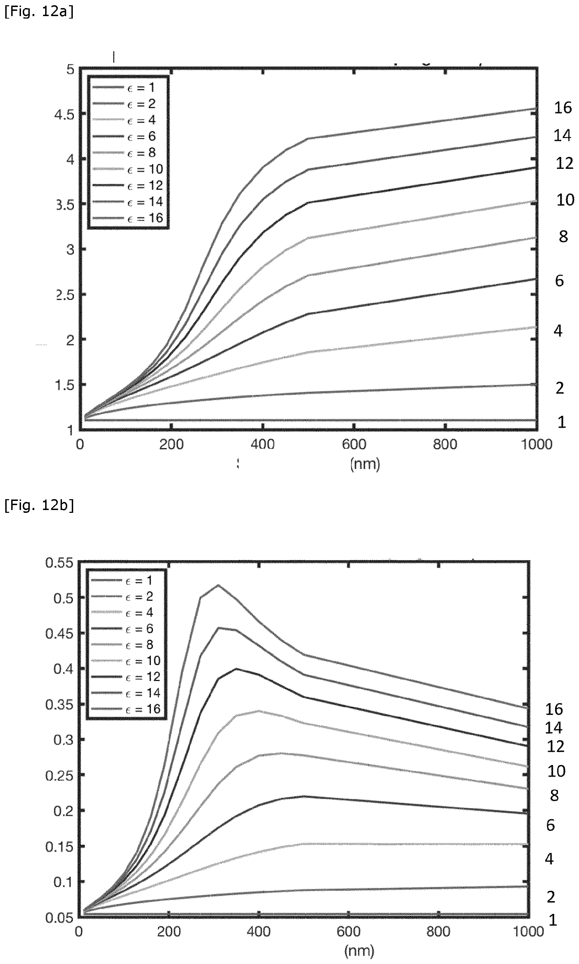

Fig. 12a shows the real part of the effective index (neff) of the excited mode as a function of the shell thickness for different values of the permittivity of the material forming the shell and the fig. 12b shows the imaginary part of the effective index (neff) of the excited mode as a function of the shell thickness for different values of the permittivity of the material forming the shell.

The IMI antenna formed by a parallelepiped bar, whatever the shape of the section, constituting the core of the core-shell structure are very sensible to the polarization of the incident radiation. They present a maximum response when they are aligned in the electric component of the incident electromagnetic field. But their answer is null if they are in an orthogonal direction. They have a high efficiency for the imagery applications that should be sensible to the polarization (for example detection of manufactured objects in a natural scene).

For the applications requiring insensibility to the polarization, the core-shell structures according to the invention can present sensitivity to the two components of the electric field in the plane of the structure such as structures in the shape of cross, "L", "V", disc (d), or square (g), etc. As it is shown in figure 13, in this case, the core-shell structure can be applied to these complex forms with the same advantages as those hereinabove described for a simple form. The core can present the form of cross, L, V covered with a shell like in (a). (b), (c). The shape of L and V can be formed by the core/shell structure in this form. The antenna (core) can be formed by two metal rods separated by a small gap, as illustrated by (e) for L-shaped antenna and by (f) for V-shaped antenna in figure 13.

Figure 14 illustrates the different steps of a method of manufacturing a bolometric detector comprising at least one of the core-shell structure according to the invention. The method of manufacturing comprises the following steps :
A : fabrication of the read out integrated circuit on a silicon wafer constituting the support substrate S ;
B : deposition of the pillar elements 5;
C : optionally deposition of a reflector R;
D : deposition of a sacrificial layer CS and planarization ;
E : deposition of contact PC on top of the pillar elements 5 and layer of dielectric material to form the bottom part of the shell 2 ;
F : deposition of one or several metal elements forming an electromagnetic radiation incident absorber element;
G : localized deposition on the metal element of another dielectric material layer to cover the metal element and forming the shell 2 on the metal element as a core 1 of the so realized core/shell structure ;
H : definition of the insulation arms 4 ;
I : removing of the sacrificial layer CS.

## Claims

1. A core-shell structure for bolometric detector wherein:
- the core (1) consists of a metal element, forming an absorber element for the incident electromagnetic radiation to be detected
- the shell (2) being constituted of an optical dielectric material covering the metal core,
said core/shell structure providing a thermometer function to measure the temperature of the absorber.

2. The core-shell structure according to the claim 1, **characterized in that** the core-shell structure has configurable characteristics according to, in particular: the type of the metal constituting the metal element; the geometry of said metal element; the type of the optical dielectric material constituting the shell; the thickness of the shell.

3. The core-shell structure according to the claim 1 or 2, **characterized in that** the core shell structure is in the form of:
a rod designed for applications requiring sensitivity to the polarization of the incident light,
a cross, a "L", a "V" a disc, or a square designed for the applications requiring insensitivity to the polarization of the incident light.

4. The core-shell structure according to any of the claims 1 to 3, **characterized in that** the metal of the core (1) part is a metal supporting surface plasmon polariton modes like silver, gold, copper, aluminum, doped aluminum, aluminum alloys, titanium nitride.

5. The core-shell structure according to anyone of the claims 1 to 4, **characterized in that** the metal element provides the thermometric function by the electrical properties of the metal element such as its electrical resistance varying with the temperature.

6. The core-shell structure according to anyone of the claims 1 to 4, **characterized in that** the shell (2) provides the thermometric function by the electrical properties of the optical dielectric material forming the shell (2) such as its electrical resistance varying with the temperature.

7. The core-shell structure according to anyone of the claims 1 to 4, **characterized in that** the shell (2) and/or the core (1) provides the thermometric function by :
- PN and/or Schottky junctions, or
- Thermoelectric effect (Seebeck), or
- Pyroelectric effect.

8. The core-shell structure according anyone of the claims 1 to 7, **characterized in that** the optical dielectric material has an optical index larger than 1.5 like germanium, silicon, silicon/germanium alloy, or vanadium oxide.

9. The core-shell structure according to anyone of the claims 1 to 8, **characterized in that** the core-shell structure has further an electric insulator layer (3) interposed between the metal core (1) and the optical dielectric material shell (2), forming a double shell structure.

10. The core-shell structure according to the claim 9, **characterized in that** the electric insulator layer (3) interposed between the metal core(1) and the dielectric optical material shell (2) is an insulator dielectric material like SiOx, SiNx, AlOx, ZnS, ZnSe.

11. The core-shell structure according to anyone of the claims 1 to 10, **characterized in that** the optical dielectric material of the shell (2) is configured to form extensions parts beyond the ends of the core-shell structure in order to provide mechanical support and thermal insulation functions for the core-shell structure.

12. The core-shell structure according to the claim 11, **characterized in that** the extension parts (2a) are realized with a geometry different from the one of shell and/or with the dielectric material having modified electrical and/or thermal properties.

13. Bolometer detector for detecting electromagnetic radiation, comprising a support substrate (S), **characterized in that** it comprises at least one core-shell structure per pixel according to one of the claims 1 to 12, the core-shell structure being suspended by support means above the support substrate (S).

14. Bolometer detector as claimed in claim 12, **characterized in that** extension parts (2a) of the shell (2) in the core-shell structure allows the electrical connection between the core/shell structure and a read out integrated circuit integrated on the substrate (S).

15. Bolometer detector according to claim 12 or 13, **characterized in that**, when the pixel size is larger than the operation wavelength or close to it, the bolometer can comprise more than one core-shell structure in one pixel.

16. Method of manufacturing a bolometric detector according to anyone of the claims 12 to 14, comprising the following steps :
A : fabrication of the read out integrated circuit on a silicon wafer constituting the support substrate S ;
B : deposition of the pillar elements (5);
C : optionally deposition of a reflector ^{®};
D : deposition of a sacrificial layer CS and planarization ;
E : deposition of contact PC on top of the pillar elements (5) and layer of optical dielectric material to form the bottom part of the shell (2) ;
F : deposition of one or several metal elements forming an electromagnetic radiation incident absorber element;
G : localized deposition on the metal element of another optical dielectric material layer and forming the shell (2) around the metal element as a core 1 of the so realized core/shell structure ;
H : definition of insulation arms (4) ;
I : removing of the sacrificial layer CS.
